# EUROPEAN PATENT APPLICATION

(11) **EP 0 608 953 A1**
(43) Date of publication of application: **03.08.1994**
(21) Application number: 94200180.1
(22) Date of filing: 27.01.1994
(51) Int. Cl.: A01C 23/02, A01C 5/04

(54) **Device for injecting liquid manure into the ground**

(30) Priority: 27.01.1993 NL 9300166
(71) Applicant: B.V. BECO, Vianen (NL)
(72) Inventor: van Vuren, Hendrik, NL-4143 VH Leerdam (NL); de Jong, Arie, NL-2964 AS Groot Ammers (NL)
(74) Representative: de Bruijn, Leendert C.

(57) **Abstract**

A device for injecting liquid manure (14) into the ground is transportable over the ground by means of a tanker or a tractor. Said device also comprises tillage means (3) for making at least a local depression in said ground, as well as manure feed means (6-7) for feeding liquid manure (14) into each depression (15). The tillage means (3) are designed to make a series of depressions (15) lying along a line and mutually essentially separate from one another, whilst the manure feed means (6,7) are transportable over said line to feed liquid manure (14) into each depression (15).

## Description

The invention relates to a device for injecting liquid manure into the ground, which device is transportable over the ground by means of, for example, a tanker or a tractor and comprises tillage means for making at least a local depression in said ground, as well as manure feed means for feeding liquid manure into each depression. A device of this type is disclosed in European Patent EP-B-322941.

Said known device comprises a number of pairs of discs, each pair making a continuous trench in the ground as the device travels over the ground. The liquid manure is then fed into the trenches formed in this way. Using a device of this type it is possible to comply with recent environmental legislation, which contains regulations with respect to ammonia emission.

A significant disadvantage of making trenches of this type is that this results in the top layer of the soil being damaged to a greater or lesser extent, depending on the type of soil. Thus, it is inevitable that continuous damage is caused to the turf and the soil structure is adversely affected. These problems usually remain limited in the case of sandy soils, so that the known device can be used with such soils.

However, the said adverse effects become serious in the case of peat and clay soils in particular. With such types of soil, frequently too large a proportion of the turf is pulled out by the known device, and this, together with the resulting damage to the soil structure, leads to a severe reduction in the carrying capacity of the soil. The lower carrying capacity of the soil in turn leads to difficulties when carrying out other activities.

The various aspects are disadvantageous, especially in peat soils, since the carrying capacity of such land is to a large extent determined by the cohesion and strength of the turf.

In the case of clay ground too, it is found to be less desirable to make continuous trenches. During a dry period trenches of this type can give rise to further cracking, as a result of which grass growth is impeded.

The aim of the invention is, therefore, to provide a device which is suitable for manure injection in peat and clay soils. This aim is achieved in that the tillage means are designed to make a series of depressions lying along a line and mutually essentially separate from one another, and the manure feed means are transportable over said line to feed liquid manure into each depression.

With the device according to the invention hardly any damage to the turf occurs because the soil is not "cut up" but is compressed in relatively small areas. Consequently, the cohesion of the turf is no longer lost, whilst there is also hardly any cause for further cracking.

The consequence is that the ground remains easily negotiable, with the result that manure can be applied several times per season and the effectiveness of the manure can be improved. It follows that a smaller application of manure each time can suffice, which has the advantage that the manure can be better absorbed by the ground.

Less force is required for making the depressions than for forming continuous trenches, as a result of which it is possible to work with lighter weight tractors. This also means that land which has a limited carrying capacity can be spared to a greater extent.

In this context, the tillage means preferably comprise a rotary element which can be rolled over the soil and is provided at the circumference with a number of protrusions, which protrusions form depressions in the soil as the rotary element is rolled. Said rotary element can be a wheel, the axle of which runs transversely to the direction of travel and the circumference of which carries teeth which terminate in a point.

The teeth can be, for example, pyramid-shaped or conical. Teeth of such a shape can be pressed into the ground without too great a force, as a result of which the rolling resistance of the wheel and the requisite tensile force remain limited.

In order to obtain the desired adjustment with respect to the soil, the rotary element can be accommodated in an auxiliary frame which is mounted on a supporting bar in such a way that it is vertically movable by means of a parallelogram mechanism, and which can be attached to a tanker.

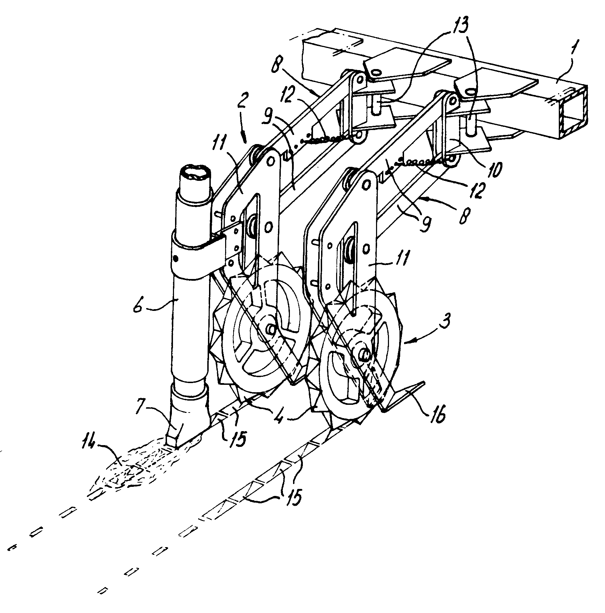

The invention will now be explained in more detail below with the aid of an illustrative embodiment shown in the figure.

The figure shows a perspective view of part of the device according to the invention.

In this figure part of a supporting bar 1, which can be mounted transversely behind a tanker or a tractor, is shown. Several auxiliary frames 2 are mounted on said supporting bar 1. Said auxiliary frames 2 each carry a rotary element 3 which has teeth 4. Said teeth 4 taper to a point.

Each auxiliary frame comprises a parallelogram section 8, comprising parallelogram rods 9. Said rods have hinge fixings, on one side to the parallelogram base 10 and on the other side to a support element 11.

A draw spring 12 is stretched between the upper parallelogram rod 9 and the base element 10 in such a way that, under pretension, downwards pressure is applied to the support element 11.

Each auxiliary frame is also rotatable about a vertical swivel axle 13, in such a way that the auxiliary frames 2 are readily able to follow the tractor around bends.

As a consequence of the prestressing in the downwards direction generated by the draw spring 12, the rotary elements 3 are pushed with a certain force into the ground to be tilled. When the tanker is driven forwards the rotary elements 3 roll over the ground to be tilled and the teeth 4 make depressions in the ground, the shape of which depressions roughly corresponds to the shape of the teeth. In the embodiment shown the teeth are pyramid-shaped, as are the depressions in the soil.

In addition, a feed line 6 for feeding liquid manure is provided on each auxiliary frame. A nozzle 7 is located at the lower end of each feed line 6, the liquid manure being fed via said nozzles 7 to the depressions which have just been made by the rotary elements 3. During this operation it would be possible for some of the manure, indicated by 14, to fall outside the holes 15. However, by far the greatest proportion of said manure will indeed flow into the holes 15, as a result of which virtually all manure will end up in the holes 15.

A deflector 16 is fitted on the front of the auxiliary frames 2, with respect to the direction of travel, the purpose of which deflector is to push aside grass and the like before the rotary elements 3 make the depressions.

As the rotary elements make separate depressions in the soil, rather than a continuous trench, the soil structure remains virtually unaffected. With this arrangement, the turf, which forms the upper portion of the ground, is not cut through, but mainly compressed, which promotes lasting cohesion.

## Claims

1. Device for injecting liquid manure into the ground, which device is transportable over the ground by means of a tanker or a tractor and comprises tillage means for making at least a local depression in said ground, as well as manure feed means for feeding liquid manure into each depression, characterised in that the tillage means are designed to make a series of depressions lying along a line and mutually essentially separate from one another, and the manure feed means are transportable over said line to feed liquid manure into each depression.

2. Device according to Claim 1, wherein the tillage means comprise a rotary element which can be rolled over the soil and is provided at the circumference with a number of protrusions, which protrusions form depressions in the soil as the rotary element is rolled.

3. Device according to Claim 2, wherein the rotary element is a wheel, the axle of which runs transversely to the direction of travel and the circumference of which carries teeth which terminate in a point.

4. Device according to Claim 2, wherein the rotary element is a roller, the axle of which runs transversely to the direction of travel and the circumference of which carries several series of teeth running in the circumferential direction.

5. Device according to Claim 3 or 4, wherein the teeth are pyramid-shaped.

6. Device according to Claim 3 or 4, wherein the teeth are conical.

7. Device according to Claim 2, 3, 4, 5 or 6, wherein the rotary element is accommodated in an auxiliary frame which is mounted on a supporting bar, in such a way that it is vertically movable by means of a parallelogram mechanism and which can be attached to a tanker or a tractor.

8. Device according to Claim 7, wherein the auxiliary frame is rotatable about a vertical axis with respect to the supporting bar.

9. Device according to Claim 8, wherein several auxiliary frames, each having a wheel, are mounted alongside one another on the supporting bar.
